# EUROPEAN PATENT SPECIFICATION

(11) **EP 3 373 158 B1**
(45) Date of publication and mention of the grant of the patent: **26.10.2022**
(21) Application number: 16867890.2
(22) Date of filing: 09.11.2016
(51) Int. Cl.: G06F 16/27, G06F 16/2455

(54) **DATA STORAGE METHOD AND COORDINATOR NODE**
DATENSPEICHERVERFAHREN UND KOORDINATORKNOTEN
PROCÉDÉ DE STOCKAGE DE DONNÉES ET NOEUD DE COORDINATEUR

(30) Priority: 27.11.2015 CN 201510867678
(43) Date of publication of application: 12.09.2018
(73) Proprietor: Huawei Technologies Co., Ltd., Longgang District Shenzhen, Guangdong 518129 (CN)
(72) Inventor: ZHANG, Jinyu, Shenzhen Guangdong 518129 (CN)
(74) Representative: Körber, Martin Hans
(86) International application number: PCT/CN2016/105243
(87) International publication number: WO 2017/088666

(56) References cited:
- EP-A2- 2 017 754
- WO-A1-2016/134628
- CN-A- 103 383 690
- CN-A- 103 383 690
- CN-A- 103 473 334
- CN-A- 103 577 440
- US-A1- 2009 100 089
- US-A1- 2010 153 349
- US-A1- 2011 191 389
- US-A1- 2014 379 692
- US-A1- 2015 154 255
- US-A1- 2015 261 816
- Deepashrikrishnaraja: "Importance of setting the right distribution key for improved performance in Netezza - IBM PureData-Netezza Developer Network (NDN) Ideation Blog - IBM PureData-Netezza Developer Network (NDN)", , 3 June 2014 (2014-06-03), XP055493037, Retrieved from the Internet: URL:https://www.ibm.com/developerworks/com munity/blogs/Wce085e09749a_4650_a064_bb3f3 b738fa3/entry/importance_of_setting_the_ri ght_distribution_key_for_improved_performa nce_in_netezza?lang=en [retrieved on 2018-07-17]
- Anonymous: "DISTRIBUTION KEY | SQL-experiences of a DBA", , 21 January 2014 (2014-01-21), XP055658007, Retrieved from the Internet: URL:https://swyssql.wordpress.com/tag/dist ribution-key/ [retrieved on 2020-01-14]

## Description

### TECHNICAL FIELD

Embodiments of the present invention relate to the field of data information management technologies, and in particular, to a data storage method and a coordinator node.

### BACKGROUND

In the prior art, data in different fields is usually stored in different databases, so as to manage the data. Different databases form a distributed data management system. The distributed data management system includes at least one coordinator node (CN) and at least one data node (DN). Any coordinator node may communicate with any data node, and any two data nodes may communicate with each other.

The coordinator node includes a global optimization querier. The global optimization querier separates or fragments each data table according to a specific rule. For example, one column or multiple columns in a data table are used as a column or columns of a distribution key of the data table, and further, data is separated or fragmented according to a hash value of a column of a distribution key. The separated or fragmented data in the data table is separately saved on different data nodes according to the distribution key, so that the data is evenly distributed to the data nodes for storage. According to an instruction of the global optimization querier, each data node may manage and operate data stored on the data node. A database includes relatively many types of data tables. Therefore, in data stored on data nodes, columns used as distribution keys in data tables may be the same or different.

In the distributed data management system, a user logins in to a client, connects to a database, and sends a data query command to the coordinator node. The global optimization querier of the coordinator node receives the data query command, parses the data query command, generates a data query plan, and distributes the generated data query plan to the data nodes. After receiving the data query plan, each data node performs data query. If joined (join) related data tables have a same distribution key, joined data may be joined inside a same node, and a result obtained after a join operation is sent to the coordinator node, so that data query efficiency can be better improved.

In a data storage method in the prior art, when a user performs data query, data stored on a data node usually needs to be redistributed, that is, in a data query process, data needs to be transmitted between multiple data nodes, and the data and a distribution key need to be rejoined between multiple data nodes. Therefore, data query efficiency is reduced, and network load is increased.

It can be learned that, in the existing data storage method, when a user queries stored data, a probability that query is performed according to a non-distribution key is increased. Consequently, a large amount of data is transmitted between data nodes, and unnecessary overheads are caused to a query process. A current requirement for high-efficiency query cannot be satisfied because of such a disadvantage.

Document US 2015 / 0154255 A1 shows a method and a parallel database comprising a leader node and one or more compute nodes, which perform storing and processing of data. Data is distributed to a particular compute node based on a particular data distribution strategy, for example, based on a hashing algorithm applied to a distribution key. A data store stores the data on persistent memory. A query optimizer uses statistics describing tables used in queries to evaluate the execution plan.

Document CN 103 383 690 A shows a distributed data storage method comprising acquiring a data resource and a data identifier corresponding to the data resource; calculating a hash value of the data identifier; calculating a disk corresponding to the data resource according to the hash value a page number in the storage unit and a block number of the disk block in the disk page; and storing the data resource according to the corresponding disk page.

Deepashrikrishnaraja, "Importance of setting the right distribution key for improved performance in Netezza - IBM PureData-Netezza Developer Network (NDN) Ideation Blog - IBM PureData-Netezza Developer Network (NDN)", (20140603), XP055493037, URL: https://www.ibm.com/developerworks/community/blogs/Wce085e09749a_4650_a064_bb3f3b738 fa3/entry/importance_of_setting_the_right_distribution_key_for_improved_performance_in_netez za?lang=en (retrieved on 2018-07-17) shows that for every table a distribution key is hashed to a numerical value. All rows with the same hash value are distributed to the same data slice. The distribution key is chosen from the set of rows frequently used or for tables frequently joined as the join keys.

Document US 2015 / 0261816 A1 shows a database system, which identifies skewed partitions in a shared-nothing database with data divided into partitions and placed over one or more nodes. A hashing algorithm is used for distributing data among the partitions. A distribution map is used to locate data. A distribution key is defined over one or more columns within the row of table data. The placement of a row of data in a partition is determined by applying a hashing algorithm to the columns of the distribution key, resulting in a distribution map index value. The database partition number at that index value in the distribution map identifies the database partition in which to store the row. Column distribution statistics are gathered for a distribution key column, and an alternate distribution key is selected, based on a statistically sampled histogram of values in the distribution key.

Document US 2011/191389 A1 discloses a distributed data management system has multiple virtual machine nodes. Each virtual machine node includes at least one data store or "bucket" for receiving data. A digital hash map data structure is stored in a computer readable medium of at least one of the multiple computers to configure the multiple virtual machine nodes and buckets to provide concurrent, non-blocking access to data in the buckets, the digital hash map data structure including a mapping between the virtual machine nodes and the buckets. The distributed data management system employing dynamic scalability in which one or more buckets from a virtual machine node reaching a memory capacity threshold are transferred to another virtual machine node that is below its memory capacity threshold.

### SUMMARY

Embodiments of the present invention provide a data storage method and a coordinator node, so that data can be effectively stored, to satisfy a current requirement for high-efficiency query. The invention is set out in the appended set of claims.

A first aspect of the present invention provides a data storage method, including the following steps:
determining, by a coordinator node (CN), according to a data table identifier corresponding to one piece of obtained data, a group of multiple distribution keys corresponding to the data table identifier, wherein each of the multiple distribution keys is a column or a combination of any several columns in multiple columns of data corresponding to the data table identifier, the group of multiple distribution keys comprising at least two join distribution keys each being a keyword and said at least two join distribution keys corresponding to a same data node;
determining, by the CN, according to each of the multiple distribution keys a data node on which the data needs to be saved and a storage area identifier corresponding to the one piece of data on said data node, wherein said data node comprises a storage area and said storage area comprises a public storage area corresponding to all distribution keys and multiple private storage areas with a one-to-one correspondence between the multiple distribution keys and the multiple private storage areas, wherein according to the multiple distribution keys at least two data nodes are determined, and wherein according to said at least two join distribution keys at least two private storage area identifiers identifying at least two private storage areas on said same data node of the at least two data nodes are determined; and;
sending, by the CN, according to the multiple distribution keys, the data and said storage area identifiers corresponding to the at least two data nodes to the at least two data nodes, wherein each storage area identifier of said storage area identifiers is used by the corresponding data node to save the data in a private storage area corresponding the storage area identifier, and wherein the at least two private storage area identifiers corresponding to the same data node are used by this data node to save the data in the at least two private storage areas of this data node.

A CN determines, according to the data table identifier corresponding to one piece of obtained data, multiple distribution keys corresponding to the data table identifier, and sends, according to the multiple distribution keys, the data and a storage area identifier corresponding to each of at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

Further, data is not stored in each of multiple distribution keys of one data node, and the data is stored in a public storage area of one data node, so that data storage space is reduced and network load is relieved.

Further, when data is queried, a storage location of the data on a data node can be accurately determined according to a queried distribution key, so that data query efficiency is improved.

Optionally, the method further includes:
after preset duration, obtaining, by the CN, at least one historical query record corresponding to the data table identifier, where each historical query record includes a join key, and the join key represents a keyword, used for data query, in the historical query record;
determining, by the CN according to the at least one historical query record, at least one join key whose occurrence frequency is greater than a threshold in the at least one historical query record;
using, by the CN, the determined at least one join key as at least one new distribution key corresponding to the data table identifier; and
updating, by the CN, a correspondence between a data table identifier and a distribution key according to the at least one new distribution key.

A keyword used when a user queries data is determined according to a historical query record, and further, the determined keyword is used as a new distribution key. Therefore, further, a probability that the keyword used when the user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

A second aspect of the present invention provides a coordinator node including a determining unit and a sending unit.

The determining unit is configured to determine, according to a data table identifier corresponding to one piece of obtained data, a group of multiple distribution keys corresponding to the data table identifier, wherein each of the multiple distribution keys is a column or a combination of any several columns in multiple columns of data corresponding to the data table identifier the group of multiple distribution keys comprising at least two join distribution keys each being a keyword and said at least two join distribution keys corresponding to a same data node. Moreover, the determining unit is further configured to determine according to each of the multiple distribution keys a data node on which the data needs to be saved and a storage area identifier corresponding to the one piece of data on said data node, wherein said data node comprises a storage area and said storage area comprises a public storage area corresponding to all distribution keys and multiple private storage areas with a one-to-one correspondence between the multiple distribution keys and the multiple private storage areas, wherein according to the multiple distribution keys at least two data nodes are determined, and wherein according to said at least two join distribution keys at least two private storage area identifiers identifying at least two private storage areas on said same data node of the at least two data nodes are determined.

A CN determines, according to a data table identifier corresponding to one piece of obtained data, multiple distribution keys corresponding to the data table identifier, and sends, according to the multiple distribution keys, the data and a storage area identifier corresponding to each of at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

Further, data is not stored in each of multiple distribution keys of one data node, and the data is stored in a public storage area of one data node, so that data storage space is reduced and network load is relieved.

Further, when data is queried, a storage location of the data on a data node can be accurately determined according to a queried distribution key, so that data query efficiency is improved.

Optionally, the coordinator node further includes a processing unit, configured to:
after preset duration, obtain at least one historical query record corresponding to the data table identifier, where each historical query record includes a join key, and the join key represents a keyword, used for data query, in the historical query record;
determine, according to the at least one historical query record, at least one join key whose occurrence frequency is greater than a threshold in the at least one historical query record;
use the determined at least one join key as at least one new distribution key corresponding to the data table identifier; and
update a correspondence between a data table identifier and a distribution key according to the at least one new distribution key.

A keyword used when a user queries data is determined according to a historical query record, and further, the determined keyword is used as a new distribution key. Therefore, further, a probability that the keyword used when the user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

A third aspect of the present invention provides a non-transitory storage medium storing executable program code which, when executed by a processor, causes the method according to the first aspect or any implementation form thereof to be performed

In the embodiments of the present invention, a CN determines, according to a data table identifier corresponding to one piece of obtained data, multiple distribution keys corresponding to the data table identifier, and the CN sends, according to the multiple distribution keys, the data and a storage area identifier corresponding to each of at least one data node to the at least one data node. Each of the at least one data node is corresponding to at least one distribution key, the storage area identifier of each of the at least one data node represents the at least one distribution key corresponding to the data node, and the storage area identifier corresponding to each of the at least one data node is used by each of the at least one data node to save the data in a storage area of the data node. The CN determines, according to the data table identifier corresponding to the piece of obtained data, the multiple distribution keys corresponding to the data table identifier, and sends, according to the multiple distribution keys, the data and the storage area identifier corresponding to each of the at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved. Therefore, a current requirement for high-efficiency query is satisfied.

### BRIEF DESCRIPTION OF DRAWINGS

To describe the technical solutions in the embodiments of the present invention more clearly, the following briefly describes the accompanying drawings required for describing the embodiments. Apparently, a person of ordinary skill in the art may still derive other drawings from these accompanying drawings without creative efforts.
FIG. 1 is a schematic diagram of a distributed data management system architecture that is applicable to an embodiment of the present invention;
FIG. 2 is a schematic flowchart of a data management method implemented on a coordinator node side according to an embodiment of the present invention;
FIG. 2a-1 and FIG. 2a-2 are a schematic diagram of an internal data storage structure of a data node that is applicable to an embodiment of the present invention;
FIG. 2b is a schematic diagram of a query method used when data on a data node is queried according to an embodiment of the present invention;
FIG. 3 is a schematic structural diagram of a coordinator node according to an embodiment of the present invention; and
FIG. 4 is a schematic structural diagram of another coordinator node according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

An identifier in the embodiments of the present invention is used to identify an object, and the object may be a data table and a storage area, such as a data table identifier, a storage area identifier, and the like in the embodiments of the present invention. An identifier may include any one of a name, a number, or ID (Identification), provided that an identified object can be distinguished from another object.

A data table in the embodiments of the present invention represents a table including a group of data corresponding to a same group of distribution keys. All data corresponding to one data table identifier is corresponding to a same group of distribution keys, and the same group of distribution keys includes multiple distribution keys.

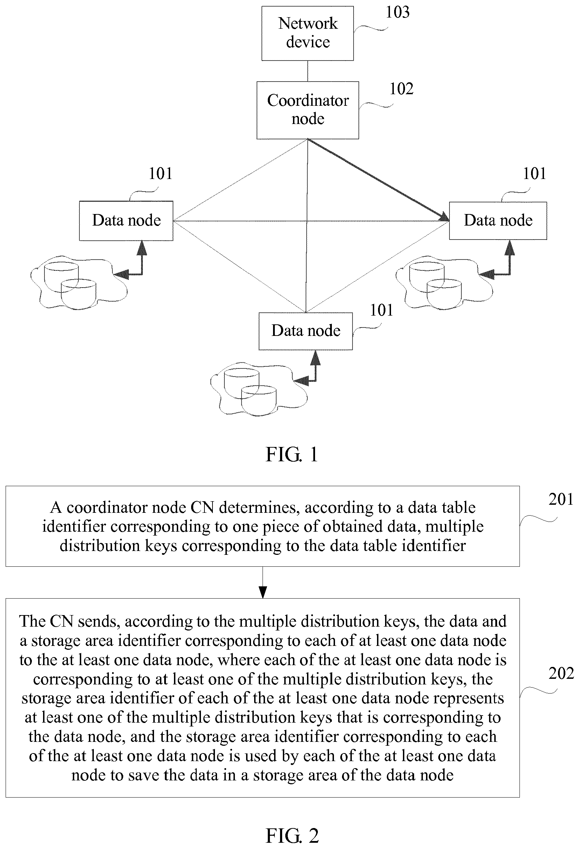

FIG. 1 shows an example of a schematic diagram of a distributed data management system architecture that is applicable to an embodiment of the present invention. As shown in FIG. 1, the system includes at least one coordinator node 102 and at least one data node 101. Any coordinator node 102 may communicate with any data node 101, and any two data nodes 101 may communicate with each other. A user enters data by using a network device 103, and the coordinator node 102 interacts with the network device 103, so that information such as data is obtained from the network device. The coordinator node uses one or more columns in one or more pieces of data as a distribution key of a data table; further, performs hash on the one or more pieces of data according to the distribution key, to obtain a hash value corresponding to each piece of data; and saves each piece of data on a data node according to the hash value, so that the data is evenly distributed to the data nodes for storage.

In the prior art, data is saved according to one distribution key. For example, a distribution key of a table A is aa, a distribution key of a table B is aa, and a distribution key of a table C is bb. When equijoin A. aa=B. aa is performed on data in the table A and the table B, join keys of both the table A and the table B are aa, that is, for the table A and the table B, join is performed according to the distribution key aa. Therefore, the table A and the table B may be joined on a same node. When equijoin B. bb=C. aa is performed on the table B and the table C, a join key of the table B is bb and a join key of the table C is aa. The distribution key of the table B is different from the join key of the table B, and the distribution key of the table C is also different from the join key of the table C. Therefore, a data node redistributes the table C according to the join key aa, and redistributes the table B according to the join key bb, so as to perform join on a same node.

It can be learned based on the foregoing description that, in the prior art, because data is saved according to only one distribution key, a probability that a keyword used when a user queries data is a distribution key corresponding to the data is relatively low, and a probability that the user performs a query operation such as join according to a non-distribution key is extremely high. Consequently, a probability of data redistribution between nodes is also relatively high. It can be learned that, when data is saved according to one distribution key in the prior art, in a subsequent data query process, network overheads are relatively large, a relatively large quantity of resources are consumed, and query efficiency is relatively low.

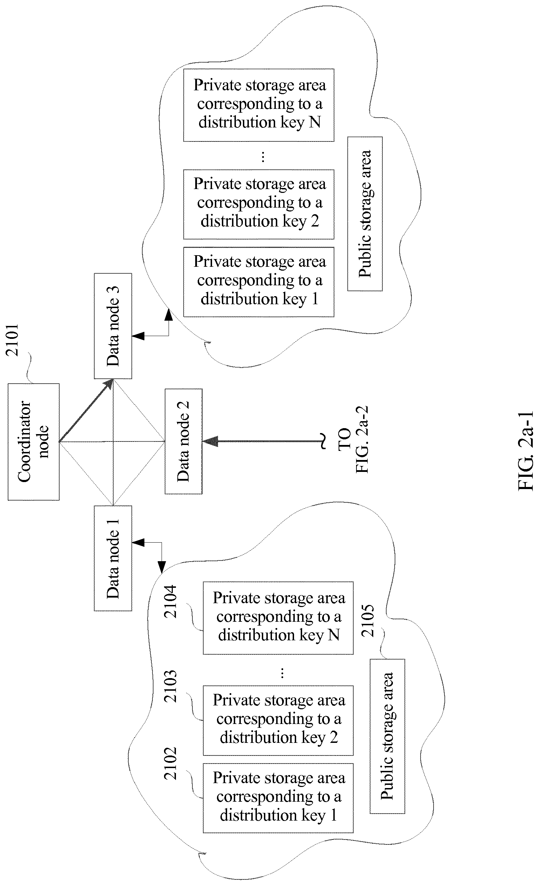

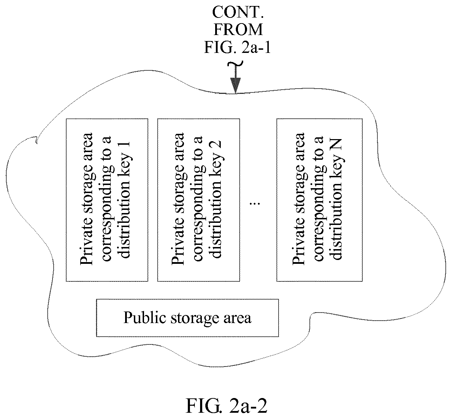

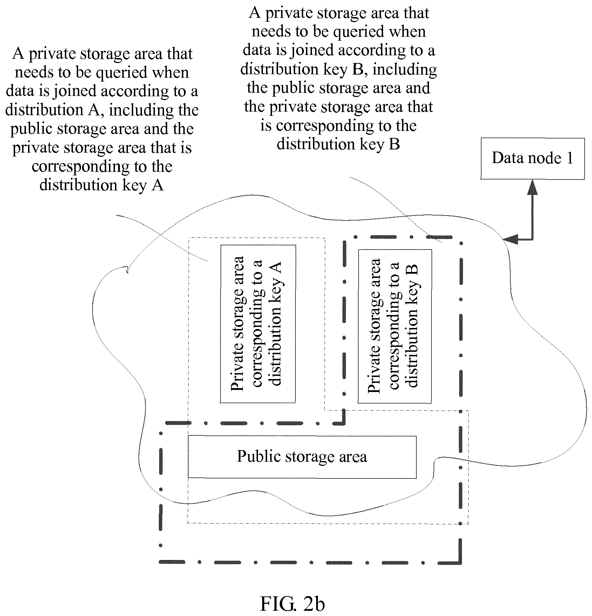

Based on the foregoing description, and the system architecture shown in FIG. 1, FIG. 2 shows a schematic flowchart of a data management method implemented on a CN side according to an embodiment of the present invention, and the method includes the following steps:
Step 201: A coordinator node CN determines, according to a data table identifier corresponding to one piece of obtained data, multiple distribution keys corresponding to the data table identifier.
Step 202: The CN sends, according to the multiple distribution keys, the data and a storage area identifier corresponding to each of at least one data node to the at least one data node, where each of the at least one data node is corresponding to at least one of the multiple distribution keys, the storage area identifier of each of the at least one data node represents the at least one of the multiple distribution keys that is corresponding to the data node, and the storage area identifier corresponding to each of the at least one data node is used by each of the at least one data node to save the data in a storage area of the data node.

A CN determines, according to a data table identifier corresponding to one piece of obtained data, multiple distribution keys corresponding to the data table identifier, and sends, according to the multiple distribution keys, the data and a storage area identifier corresponding to each of at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

Each of the at least one data node is corresponding to at least one of the multiple distribution keys. For example, there are a first data node, a second data node, a third data node, and a fourth data node. A first distribution key is corresponding to the first data node and the second data node, that is, when data is saved according to the first distribution key, the data may be saved on the first data node or the second data node. A second distribution key may be corresponding to the second data node and the third data node, that is, when data is saved according to the second distribution key, the data may be saved on the second data node or the third data node.

The storage area identifier of each of the at least one data node represents the at least one of the multiple distribution keys that is corresponding to the data node. An optional implementation manner is: The storage area identifier of each of the at least one data node is at least one of the multiple distribution keys that is corresponding to the data node. Another optional implementation manner is: The storage area identifier of each of the at least one data node is a storage area identifier corresponding to at least one of the multiple distribution keys that is corresponding to the data node. For example, if a distribution key is "class", a storage area of a data node may be divided into at least one area, and the at least one area includes a storage area corresponding to the distribution key "class". A storage area identifier corresponding to the distribution key "class" may be an identifier such as "001" that can identify the storage area, or a storage area identifier corresponding to the distribution key "class" is the distribution key "class".

Before step 201, a user creates a data table by using a structured query language (SQL) statement of a create table, where the data table is corresponding to a data table identifier; and further designates multiple distribution keys for the created data table, and saves information about a distribution key corresponding to the data table identifier in the CN or another device connected to the CN, so that the CN can obtain the information about the distribution key corresponding to the data table identifier from the another device connected to the CN. Optionally, a correspondence between a data table identifier and a distribution key is preset on the CN. An optional implementation manner is: The CN saves the correspondence between a data table identifier and a distribution key on the CN in advance according to the SQL statement. One data table identifier may be corresponding to one or more distribution keys, and multiple distribution keys corresponding to one data table identifier are different. Any distribution key may be any column or a combination of any several columns in multiple columns of data corresponding to the data table identifier. This embodiment of the present invention imposes no limitation thereto. The following content is described by using only one piece of data as an example.

In specific implementation, the user enters one or more pieces of data for a user provider interface by using a system. Each piece of data includes multiple columns. After the user enters the data into the system, the CN obtains, in real time or periodically, the data entered by the user into the system, or inserts the data by using an insert statement, or imports the data in batches by using a copy command or another tool. Regardless of whether the data is entered, inserted, or imported by the user, the CN processes the obtained data piece by piece, and the CN may obtain an identifier of a data table in which each piece of data needs to be stored, that is, the CN may determine a data table identifier corresponding to a piece of data. After obtaining a piece of data, the CN determines a data table identifier corresponding to the data and multiple distribution keys corresponding to the data table identifier, and saves the data according to the distribution keys.

In step 202, a data node on which the data needs to be stored according to each distribution key is determined according to each of the multiple distribution keys. Optionally, hash is performed on the data according to each distribution key corresponding to the data table identifier corresponding to the data, to obtain a hash value corresponding to the data; and the data node on which the data needs to be stored is determined according to the determined hash value. There may be multiple implementation manners in this embodiment of the present invention. The following several optional implementation manners are provided in this embodiment of the present invention.

Manner 1: If it is determined according to the multiple distribution keys that the data needs to be stored on a same data node, the CN sends the data and a storage area identifier of one data node to the data node according to the multiple distribution keys, and the storage area identifier is used by the data node to save the data in a public storage area of the data node.

Further, if it is determined according to the multiple distribution keys that the data needs to be stored on multiple data nodes, the CN sends, according to the multiple distribution keys, the data and storage area identifiers respectively corresponding to multiple data nodes to the multiple data nodes. A storage area identifier corresponding to each of the multiple data nodes is used by each of the multiple data nodes to save the data in at least one storage area of the data node, and the at least one storage area is a private storage area of each of at least one distribution key corresponding to the data node.

Manner 2: A data node on which the data needs be stored, and a storage area identifier corresponding to the data on the data node are determined according to each of the multiple distribution keys. The CN sends the data and the storage area identifier corresponding to the data on the data node to the data node. The storage area identifier is a private storage area identifier corresponding to the distribution key. The data node saves, according to the storage area identifier, the data in a private storage area corresponding to the distribution key. If the data is saved on a same node sequentially according to all distribution keys, the data is saved in a public storage area corresponding to all the distribution keys of the data node, and the data stored in another storage area of the data node is deleted.

FIG. 2a-1 and FIG. 2a-2 show an example of a schematic diagram of an internal data storage structure of a data node that is applicable to an embodiment of the present invention. As shown in FIG. 2a-1 and FIG. 2a-2, one coordinator node 2101 is connected to three data nodes that are separately a data node 1, a data node 2, and a data node 3. The three data nodes have similar data storage structures. The data node 1 is used as an example for description. When a data table identifier stored on the data node 1 is corresponding to N distribution keys that are separately a distribution key 1, a distribution key 2, ..., and a distribution key N, where N is an integer greater than 1, the data node 1 includes (N+1) storage areas that are separately a private storage area 2102 corresponding to the distribution key 1, a private storage area 2103 corresponding to the distribution key 2, ..., a private storage area 2104 corresponding to the distribution key N, and a public storage area 2105 corresponding to all the distribution keys.

With reference to the example in Manner 1, after obtaining a piece of data, the CN obtains a data table identifier corresponding to the piece of data, determines, according to a preset correspondence between a data table identifier and a distribution key, and the data table identifier corresponding to the obtained piece of data, multiple distribution keys corresponding to the data table identifier; and determines, according to each of the multiple distribution keys, a data node on which the data needs to be stored.

If it is determined according to the multiple distribution keys that the data needs to be stored on a same data node, the CN sends the data and a storage area identifier of the determined data node to the data node according to the multiple distribution keys. In this case, the storage area identifier of the data node is an identifier of a public storage area that is on the data node and that is corresponding to all the multiple distribution keys. For example, hash is performed on the data according to the distribution key 1, and after a hash value is obtained, it is determined according to the hash value that the data needs to be stored on the data node 1. Hash is performed on the data according to the distribution key 2, and it is determined according to an obtained hash value that the data needs to be stored on the data node 1. Hash is performed on the data according to each of the N distribution keys, and it is determined that the data needs to be stored on the data node 1 when hash is performed on the data according to each of the N distribution keys. In this case, the CN sends the data and a public storage area identifier of the data node 1 to the data node 1, so that the data node 1 saves the data in a public storage area of the data node 1.

If it is determined according to the multiple distribution keys that the data needs to be stored on multiple data nodes, the CN sends, according to the multiple distribution keys, the data and storage area identifiers respectively corresponding to the multiple data nodes to the multiple data nodes. For example, when N is 4, hash is performed on the data according to a distribution key 1, and it is determined according to an obtained hash value that the data needs to be stored on the data node 1; hash is performed on the data according to a distribution key 2, and it is determined according to an obtained hash value that the data needs to be stored on the data node 2; hash is performed on the data according to a distribution key 3, and it is determined according to an obtained hash value that the data needs to be stored on the data node 3; and hash is performed on the data according to a distribution key 4, and it is determined according to an obtained hash value that the data needs to be stored on the data node 1. In this case, the CN sends the data, a private storage area identifier corresponding to the distribution key 1, and a private storage area identifier corresponding to the distribution key 4 to the data node 1, so that the data node 1 saves the data in a private storage area, corresponding to the distribution key 1, on the data node 1, and also saves the data in a private storage area, corresponding to the distribution key 4, on the data node 1. The CN sends the data and a private storage area identifier corresponding to the distribution key 2 to the data node 2, so that the data node 2 saves the data in a private storage area, corresponding to the distribution key 2, on the data node 2. The CN sends the data and a private storage area identifier corresponding to the distribution key 3 to the data node 3, so that the data node 3 saves the data in a private storage area, corresponding to the distribution key 3, on the data node 3.

In Manner 2, in a specific example, N is 4. For example, hash is performed on the data according to the distribution key 1, and after a hash value is obtained, it is determined according to the hash value that the data needs to be stored on the data node 1. In this case, the CN sends the data and a private storage area identifier corresponding to the distribution key 1 to the data node 1, so that the data node 1 saves the data in a private storage area, corresponding to the distribution key 1, on the data node 1. It is determined according to the distribution key 2 that the data needs to be stored on the data node 1. In this case, the CN sends the data and a private storage area identifier corresponding to the distribution key 1 to the data node 1, so that the data node 1 saves the data in a private storage area, corresponding to the distribution key 2, on the data node 1. It is determined according to the distribution key 3 that the data needs to be stored on the data node 1. In this case, the CN sends the data and a private storage area identifier corresponding to the distribution key 1 to the data node 1, so that the data node 1 saves the data in a private storage area, corresponding to the distribution key 3, on the data node 1. It is determined according to the distribution key 4 that the data needs to be stored on the data node 1. In this case, the CN sends the data and a private storage area identifier corresponding to the distribution key 1 to the data node 1, so that the data node 1 saves the data in a private storage area, corresponding to the distribution key 4, on the data node 1. In this case, when it is determined according to four distribution keys that the data needs to be stored on a same data node, that is, the data node 1, the data is saved in a public storage area of the data node 1, the data stored in the private storage area, corresponding to the distribution key 1, on the data node is deleted, the data stored in the private storage area corresponding to the distribution key 2 is deleted, the data stored in the private storage area corresponding to the distribution key 3 is deleted, and the data stored in the private storage area corresponding to the distribution key 4 is deleted.

In another example, hash is performed on the data according to the distribution key 1, and after a hash value is obtained, it is determined according to the hash value that the data needs to be stored on the data node 1. In this case, the CN sends the data and a private storage area identifier corresponding to the distribution key 1 to the data node 1, so that the data node 1 saves the data in a private storage area, corresponding to the distribution key 1, on the data node 1. It is determined according to the distribution key 2 that the data needs to be stored on the data node 2. In this case, the CN sends the data and a private storage area identifier corresponding to the distribution key 2 to the data node 2, so that the data node 2 saves the data in a private storage area, corresponding to the distribution key 2, on the data node 2. It is determined according to the distribution key 3 that the data needs to be stored on the data node 3. In this case, the CN sends the data and a private storage area identifier corresponding to the distribution key 3 to the data node 3, so that the data node 3 saves the data in a private storage area, corresponding to the distribution key 3, on the data node 3. It is determined according to the distribution key 4 that the data needs to be stored on the data node 1. In this case, the CN sends the data and a private storage area identifier corresponding to the distribution key 4 to the data node 1, so that the data node 1 saves the data in a private storage area, corresponding to the distribution key 4, on the data node 1. In this case, it is determined according to four distribution keys that the data needs to be stored on multiple data nodes that are the data node 1, the data node 2, and the data node 3.

Optionally, when a distribution key corresponding to a data table identifier is initially set, one or more distribution keys may be correspondingly set for the data table identifier. A person skilled in the art may set the distribution key according to experience. Optionally, after preset duration such as several weeks or several months, the CN obtains at least one historical query record corresponding to the data table identifier. Each historical query record includes a join key, and the join key represents a keyword, used for data query, in the historical query record. The CN determines, according to the at least one historical query record, at least one join key whose occurrence frequency is greater than a threshold in the at least one historical query record. The CN uses the determined at least one join key as at least one new distribution key corresponding to the data table identifier. The CN updates a correspondence between a data table identifier and a distribution key according to the at least one new distribution key. Specifically, the historical query record includes an equijoin condition, and the equijoin condition includes a join key.

For example, a distribution key A is correspondingly set for a data table identifier, and then, after preset duration, five historical query records are obtained, and the historical query records may be an SQL statement. In this case, the historical query records are searched for an equijoin condition to determine a join key, and a join key that occurs is used as a new distribution key. Optionally, if it is determined that occurrence frequency of a join key B is greater than a threshold, the join key B is set as a new distribution key, and a preset correspondence between a data table identifier and a distribution key is updated. After the updating, the data table identifier is corresponding to the distribution key B. Optionally, the CN redistributes data on a data node by using a received command sent by a user, or the CN automatically redistributes data on a data node by using the updated distribution key B. A possible implementation manner is: A data table identifier is originally corresponding to the distribution key A. After the historical query records are analyzed, it is found that occurrence frequency of the join key A, occurrence frequency of the join key B, and occurrence frequency of the join key C are all greater than the threshold. In this case, the join key A, the join key B, and the join key C are all set as new distribution keys, and an updated correspondence between a data table identifier and a distribution key is: the data table identifier is corresponding to the distribution key A, the distribution key B, and the distribution key C. The CN redistributes data on a data node according to the updated distribution key B and distribution key C. A redistribution process is specifically: The CN sends a redistribution command to all data nodes. Each data node determines, according to the new distribution key B and distribution key C, which piece of data stored on the data node belongs to the data node and which piece of data belongs to another data node, and sends, to the another data node, stored data that belongs to the another data node. For example, if a data node 1 determines that a piece of data stored on the data node 1 needs to be stored on a data node 4, the data node 1 sends the data to the data node 4, and the data node 4 receives and saves the data.

An SQL statement used for redistributing data in a data table TB_SVC_SUBS_HIST by using the distribution key A, the distribution key B, and the distribution key C may be:
create table TB_SVC_SUBS_HIST(...) distribute by (a distribution key A), (a distribution key B), and (a distribution key C).

After data is managed by using the foregoing method, during query, a user logins in to a client, connects to a database, and sends a data query command. A global optimization querier of the CN receives the data query command, parses the data query command, generates a data query plan, and distributes the generated data query plan to data nodes. After receiving the data query plan, each data node performs data query.

For any data node, the data node performs a hash operation on the received data query plan, and determines, according to a result obtained after the hash calculation, a location in which the data is stored. For example, a data node 1 determines that the data is in a private storage area corresponding to a distribution key 1, a private storage area corresponding to a distribution key 4, or a public storage area corresponding to all distribution keys of the data node. Further, data is scanned in the determined location in which the data is stored.

In this embodiment of the present invention, a data table identifier corresponding to each piece of data may be corresponding to multiple distribution keys. Therefore, a probability that a join key queried in a query plan is a distribution key is relatively high, and a probability that to-be-joined data is on a same data node is increased. If it is determined that two pieces of data are stored on a same data node, a join operation is performed on the data on each data node that stores the data. Each data node sends an obtained join result to a CN. After arranging and combining the join results, the CN returns queried data to a client, and presents the queried data to a user. If it is determined that two pieces of data are stored on different data nodes, the data is transmitted between the data nodes, so that the two pieces of data are stored on a same data node.

FIG. 2b shows an example of a schematic diagram of a query method used when data on a data node is queried according to an embodiment of the present invention. As shown in FIG. 2b, data 1 is stored on a data node 1 and a data node 2 according to a distribution key A and a distribution key B. Data 2 is distributed according to the distribution key A. Data 3 is distributed according to the distribution key B. When a user needs to join the data 1 and the data 2 according to the distribution key A, and join the data 1 and the data 3 according to the distribution key B, the data node 1 is used as an example. The data node 1 queries a private storage area and a public storage area that are corresponding to the distribution key A and that are on the data node 1, and the data 1 and the data 2 are joined on the data node 1. The data node 1 queries a private storage area and a public storage area that are corresponding to the distribution key B and that are on the data node 1, and the data 1 and the data 3 are joined on the data node 1. The foregoing similar method procedure is performed on both the data node 2 and a data node 3, and details are not described herein.

An SQL statement used for joining the data 1 and the data 2 according to the distribution key A is as follows: The data 1 is TB_SVC-SUBS-HIST, the data 2 is DIL-BILL, and the distribution key A is SUBS-ID:
Select count (^{∗}) from TB_SVC-SUBS-HIST JOIN DIL-BILL on TB_SVC-SUBS-HIST SUBS-ID=DIL-BILL SUBS-ID

An SQL statement used for joining the data 1 and the data 3 according to the distribution key B is as follows: The data 1 is TB_SVC-SUBS-HIST, the data 3 is GPRS-CDR, and the distribution key B is MSISDN:
Select count (^{∗}) from TB_SVC-SUBS-HIST JOIN GPRS-CDR on TB_SVC-SUBS-HIST MSISDN=GPRS-CDR MSISDN

It can be learned from the foregoing content that, in this embodiment of the present invention, a CN determines, according to a data table identifier corresponding to one piece of obtained data, multiple distribution keys corresponding to the data table identifier, and the CN sends, according to the multiple distribution keys, the data and a storage area identifier corresponding to each of at least one data node to the at least one data node. Each of the at least one data node is corresponding to at least one distribution key, the storage area identifier of each of the at least one data node represents the at least one distribution key corresponding to the data node, and the storage area identifier corresponding to each of the at least one data node is used by each of the at least one data node to save the data in a storage area of the data node. The CN determines, according to the data table identifier corresponding to the piece of obtained data, the multiple distribution keys corresponding to the data table identifier, and sends, according to the multiple distribution keys, the data and the storage area identifier corresponding to each of the at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

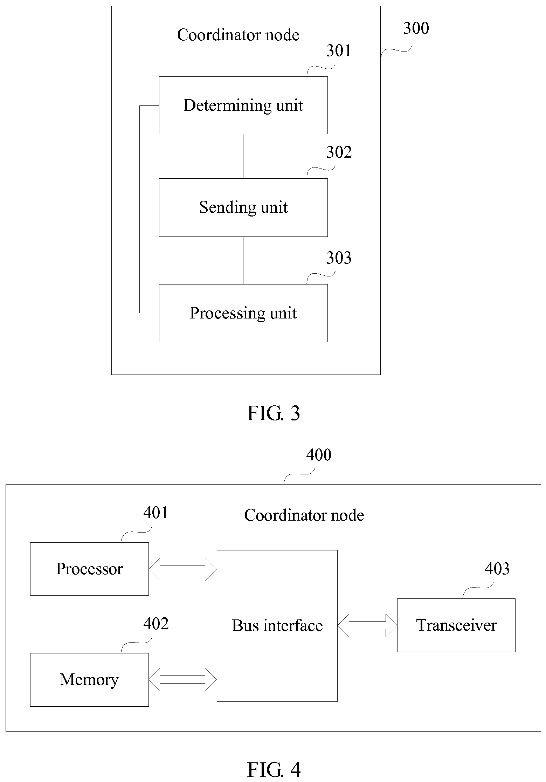

FIG. 3 shows an example of a schematic structural diagram of a coordinator node according to an embodiment of the present invention.

Based on same conception, a coordinator node 300 provided in this embodiment of the present invention is configured to perform the foregoing method procedure. As shown in FIG. 3, a determining unit 301 and a sending unit 302 are included. Optionally, the processing unit 303 is further included.

The determining unit is configured to determine, according to a data table identifier corresponding to one piece of obtained data, multiple distribution keys corresponding to the data table identifier.

The sending unit is configured to send, according to the multiple distribution keys, the data and a storage area identifier corresponding to each of at least one data node to the at least one data node. Each of the at least one data node is corresponding to at least one of the multiple distribution keys, the storage area identifier of each of the at least one data node represents the at least one of the multiple distribution keys that is corresponding to the data node, and the storage area identifier corresponding to each of the at least one data node is used by each of the at least one data node to save the data in a storage area of the data node.

Further, the sending unit is specifically configured to:
send the data and a storage area identifier of one data node to the data node according to the multiple distribution keys, where the storage area identifier is used by the data node to save the data in a public storage area of the data node.

Further, the sending unit is specifically configured to:
send, according to the multiple distribution keys, the data and storage area identifiers respectively corresponding to multiple data nodes to the multiple data nodes, where a storage area identifier corresponding to each of the multiple data nodes is used by each of the multiple data nodes to save the data in at least one storage area of the data node, and the at least one storage area is a private storage area of each of at least one distribution key corresponding to the data node.

Optionally, the coordinator node further includes the processing unit that is configured to:
after preset duration, obtain at least one historical query record corresponding to the data table identifier, where each historical query record includes a join key, and the join key represents a keyword, used for data query, in the historical query record;
determine, according to the at least one historical query record, at least one join key whose occurrence frequency is greater than a threshold in the at least one historical query record;
use the determined at least one join key as at least one new distribution key corresponding to the data table identifier; and
update a correspondence between a data table identifier and a distribution key according to the at least one new distribution key.

It can be learned from the foregoing content that, in this embodiment of the present invention, a CN determines, according to a data table identifier corresponding to one piece of obtained data, multiple distribution keys corresponding to the data table identifier, and the CN sends, according to the multiple distribution keys, the data and a storage area identifier corresponding to each of at least one data node to the at least one data node. Each of the at least one data node is corresponding to at least one distribution key, the storage area identifier of each of the at least one data node represents the at least one distribution key corresponding to the data node, and the storage area identifier corresponding to each of the at least one data node is used by each of the at least one data node to save the data in a storage area of the data node. The CN determines, according to the data table identifier corresponding to the piece of obtained data, the multiple distribution keys corresponding to the data table identifier, and sends, according to the multiple distribution keys, the data and the storage area identifier corresponding to each of the at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

FIG. 4 shows an example of a schematic structural diagram of another coordinator node according to an embodiment of the present invention.

Based on same conception, a coordinator node 400 provided in this embodiment of the present invention is configured to perform the foregoing method procedure. As shown in FIG. 4, a processor 401, a transceiver 403, and a memory 402 are included.

The memory is configured to: store a correspondence between a data table identifier and multiple distribution keys, an instruction, and related data that is used when the processor executes the instruction, and provide the correspondence between a data table identifier and multiple distribution keys for the processor.

The processor is configured to read the instruction in the memory to perform the following processes:
determining, according to a data table identifier corresponding to one piece of obtained data and by using the memory, multiple distribution keys corresponding to the data table identifier; and
sending, according to the multiple distribution keys and by using a transceiver, the data and a storage area identifier corresponding to each of at least one data node to the at least one data node, where each of the at least one data node is corresponding to at least one of the multiple distribution keys, the storage area identifier of each of the at least one data node represents the at least one of the multiple distribution keys that is corresponding to the data node, and the storage area identifier corresponding to each of the at least one data node is used by each of the at least one data node to save the data in a storage area of the data node.

The transceiver is configured to send the data and the storage area identifier corresponding to each of the at least one data node to the at least one data node. Optionally, the transceiver is further configured to: send signaling and data to another coordinator node, receive signaling and data sent by the another coordinator node, send signaling to a data node, and receive data sent by the data node.

Further, the processor is specifically configured to:
send the data and a storage area identifier of one data node to the data node according to the multiple distribution keys by using the transceiver, where the storage area identifier is used by the data node to save the data in a public storage area of the data node.

Correspondingly, the transceiver is specifically configured to send the data and the storage area identifier of one data node to the data node.

Further, the processor is specifically configured to:
send, according to the multiple distribution keys and by using the transceiver, the data and storage area identifiers respectively corresponding to multiple data nodes to the multiple data nodes, where a storage area identifier corresponding to each of the multiple data nodes is used by each of the multiple data nodes to save the data in at least one storage area of the data node, and the at least one storage area is a private storage area of each of at least one distribution key corresponding to the data node.

Correspondingly, the transceiver is specifically configured to send the data and the storage area identifiers respectively corresponding to the multiple data nodes to the multiple data nodes.

Optionally, the processor is further configured to:
after preset duration, obtain at least one historical query record corresponding to the data table identifier, where each historical query record includes a join key, and the join key represents a keyword, used for data query, in the historical query record;
determine, according to the at least one historical query record, at least one join key whose occurrence frequency is greater than a threshold in the at least one historical query record;
use the determined at least one join key as at least one new distribution key corresponding to the data table identifier; and
update the correspondence, stored in the memory, between a data table identifier and a distribution key according to the at least one new distribution key.

A bus architecture may include any quantity of interconnected buses and bridges, and specifically, various circuits of one or more processors represented by a processor are linked to various circuits of a memory represented by a memory. The bus architecture may further link various other circuits such as a peripheral device, a voltage stabilizer, and a power management circuit. This is well known in the art, and therefore, no further description is provided in this specification. A bus interface provides an interface. The transceiver may be multiple elements, that is, includes a transmitter and a receiver, and the transceiver provides units for communicating with various other apparatuses on a transmission medium. The processor is responsible for bus architecture management and general processing. The memory may store data used when the processor executes an operation.

It can be learned from the foregoing content that, in this embodiment of the present invention, a CN determines, according to a data table identifier corresponding to one piece of obtained data, multiple distribution keys corresponding to the data table identifier, and the CN sends, according to the multiple distribution keys, the data and a storage area identifier corresponding to each of at least one data node to the at least one data node. Each of the at least one data node is corresponding to at least one distribution key, the storage area identifier of each of the at least one data node represents the at least one distribution key corresponding to the data node, and the storage area identifier corresponding to each of the at least one data node is used by each of the at least one data node to save the data in a storage area of the data node. The CN determines, according to the data table identifier corresponding to the piece of obtained data, the multiple distribution keys corresponding to the data table identifier, and sends, according to the multiple distribution keys, the data and the storage area identifier corresponding to each of the at least one data node to the at least one data node. Therefore, one piece of data can be saved according to multiple distribution keys. In this effective data storage method, distribution keys corresponding to the data are increased. Therefore, a probability that a keyword used when a user queries data is a distribution key is increased, and a probability that the user performs a query operation such as join according to a non-distribution key is reduced, so that a probability of data redistribution between nodes is reduced, overheads and consumption of resources such as a network or content are further reduced, and data query efficiency is improved.

A person skilled in the art should understand that the embodiments of the present invention may be provided as a method, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, a person skilled in the art can make changes and modifications to these embodiments once they learn the basic inventive concept. Therefore, the following claims are intended to be construed as to cover the embodiments and all changes and modifications falling within the scope of the present invention.

## Claims

1. A data storage method, comprising the following steps:
determining (201), by a coordinator node, CN, (102, 2101) according to a data table identifier corresponding to one piece of obtained data, a group of multiple distribution keys corresponding to the data table identifier, wherein each of the multiple distribution keys is a column or a combination of any several columns in multiple columns of data corresponding to the data table identifier, the group of multiple distribution keys comprising at least two join distribution keys each being a keyword and said at least two join distribution keys corresponding to a same data node;
determining, by the CN (102, 2101), according to each of the multiple distribution keys a data node (101) on which the data needs to be saved and a storage area identifier corresponding to the one piece of data on said data node (101), wherein said data node (101) comprises a storage area and said storage area comprises a public storage area (2105) corresponding to all distribution keys and multiple private storage areas (2102, 2103, 2104) with a one-to-one correspondence between the multiple distribution keys and the multiple private storage areas (2102, 2103, 2104), wherein according to the multiple distribution keys at least two data nodes (101) are determined, and wherein according to said at least two join distribution keys at least two private storage area identifiers identifying at least two private storage areas on said same data node of the at least two data nodes (101) are determined; and;
sending, by the CN (102, 2101), according to the multiple distribution keys, the data and said storage area identifiers corresponding to the at least two data nodes (101) to the at least two data nodes (101), wherein each storage area identifier of said storage area identifiers is used by the corresponding data node to save the data in a private storage area corresponding the storage area identifier, and wherein the at least two private storage area identifiers corresponding to the same data node are used by this data node to save the data in the at least two private storage areas (2102, 2103, 2104) of this data node.

2. The method according to claim 1, further comprising:
after a preset duration, obtaining, by the CN (102, 2101), at least one historical query record corresponding to the data table identifier, wherein each historical query record comprises a join key, and the join key represents a keyword, used for data query, in the historical query record;
determining, by the CN (102, 2101) according to the at least one historical query record, at least one join key whose occurrence frequency is greater than a threshold in the at least one historical query record;
using, by the CN (102, 2101), the determined at least one join key as at least one new distribution key corresponding to the data table identifier; and
updating, by the CN (102, 2101), a correspondence between the data table identifier and a distribution key according to the at least one new distribution key.

3. A coordinator node (102, 2101, 300), comprising:
a determining unit (301), configured to determine, according to a data table identifier corresponding to one piece of obtained data, a group of multiple distribution keys corresponding to the data table identifier, wherein each of the multiple distribution keys is a column or a combination of any several columns in multiple columns of data corresponding to the data table identifier the group of multiple distribution keys comprising at least two join distribution keys each being a keyword and said at least two join distribution keys corresponding to a same data node and
to determine according to each of the multiple distribution keys a data node (101) on which the data needs to be saved and a storage area identifier corresponding to the one piece of data on said data node (101), wherein said data node (101) comprises a storage area and said storage area comprises a public storage area (2105) corresponding to all distribution keys and multiple private storage areas (2102, 2103, 2104) with a one-to-one correspondence between the multiple distribution keys and the multiple private storage areas (2102, 2103, 2104), wherein according to the multiple distribution keys at least two data nodes (101) are determined, and wherein according to said at least two join distribution keys at least two private storage area identifiers identifying at least two private storage areas on said same data node of the at least two data nodes (101) are determined; and
a sending unit (302), configured to
send, according to the multiple distribution keys, the data and the storage area identifiers corresponding to at least two data nodes (101) to the at least two data nodes (101), wherein each storage area identifier of said storage area identifiers is used by the corresponding data node to save the data in a private storage area corresponding the storage area identifier, and wherein the at least two private storage area identifiers corresponding to the same data node are used by this data node to save the data in the at least two private storage areas (2102, 2103, 2104) of this data node.

4. The coordinator node (102, 2101, 300) according to claim 3, further comprising a processing unit (303), configured to:
after a preset duration, obtain at least one historical query record corresponding to the data table identifier, wherein each historical query record comprises a join key, and the join key represents a keyword, used for data query, in the historical query record;
determine, according to the at least one historical query record, at least one join key whose occurrence frequency is greater than a threshold in the at least one historical query record;
use the determined at least one join key as at least one new distribution key corresponding to the data table identifier; and
update a correspondence between the data table identifier and a distribution key according to the at least one new distribution key.

5. A non-transitory computer-readable media storing computer instructions for data storage, that when executed by one or more processors, cause the one or more processors to perform the method of claims 1 to 2.

## Patentansprüche

1. Datenspeicherverfahren, umfassend die folgenden Schritte:
Bestimmen (201) einer Gruppe von mehreren Verteilungsschlüsseln, die einer Datentabellenkennung entspricht, durch einen Koordinatorknoten, CN, (102, 2101) gemäß der Datentabellenkennung, die einem Element von erhaltenen Daten entspricht, wobei jeder der mehreren Verteilungsschlüssel eine Spalte oder eine Kombination von einigen Spalten in mehreren Spalten von Daten ist, die der Datentabellenkennung entspricht, wobei die Gruppe von mehreren Verteilungsschlüsseln mindestens zwei verbundene Verteilungsschlüssel umfasst, wobei es sich jeweils um ein Schlüsselwort handelt, und die mindestens zwei verbundenen Verteilungsschlüssel einem gleichen Datenknoten entsprechen;
Bestimmen eines Datenknotens (101), auf dem die Daten gespeichert werden müssen, und einer Speicherbereichskennung, die dem einen Datenelement auf dem Datenknoten (101) entspricht, durch den CN (102, 2101) gemäß jedem der mehreren Verteilungsschlüssel, wobei der Datenknoten (101) einen Speicherbereich umfasst, und der Speicherbereich einen öffentlichen Speicherbereich (2105), der allen Verteilungsschlüsseln entspricht, und mehrere private Speicherbereiche (2102, 2103, 2104) mit einer Eins-zu-eins-Entsprechung zwischen den mehreren Verteilungsschlüsseln und den mehreren privaten Speicherbereichen (2102, 2103, 2104) umfasst, wobei gemäß den mehreren Verteilungsschlüsseln mindestens zwei Datenknoten (101) bestimmt werden, und wobei gemäß den mindestens zwei verbundenen Verteilungsschlüsseln Kennungen von mindestens zwei privaten Speicherbereichen bestimmt werden, die mindestens zwei private Speicherbereiche auf dem gleichen Datenknoten der mindestens zwei Datenknoten (101) identifizieren; und
Senden der Daten und der Speicherbereichskennungen, die den mindestens zwei Datenknoten (101) entsprechen, durch den CN (102, 2101) gemäß den mehreren Verteilungsschlüsseln an die mindestens zwei Datenknoten (101), wobei jede Speicherbereichskennung der Speicherbereichskennungen vom entsprechenden Datenknoten zum Speichern der Daten im privaten Speicherbereich verwendet wird, der der Speicherbereichskennung entspricht, und wobei die Kennungen der mindestens zwei privaten Speicherbereiche, die dem gleichen Datenknoten entsprechen, von diesem Datenknoten zum Speichern der Daten in den mindestens zwei privaten Speicherbereichen (2102, 2103, 2104) dieses Datenknotens verwendet werden.

2. Verfahren nach Anspruch 1, ferner umfassend:
Erhalten mindestens eines Verlaufsabfragedatensatzes, der der Datentabellenkennung entspricht, durch den CN (102, 2101) nach einer voreingestellten Dauer, wobei jeder Verlaufsabfragedatensatz einen verbundenen Schlüssel umfasst, und der verbundene Schlüssel ein Schlüsselwort, das zur Datenabfrage verwendet wird, im Verlaufsabfragedatensatz darstellt;
Bestimmen mindestens eines verbundenen Schlüssels, dessen Auftrittshäufigkeit in dem mindestens einen Verlaufsabfragedatensatz größer als eine Schwelle ist, durch den CN (102, 2101) gemäß dem mindestens einen Verlaufsabfragedatensatz;
Verwenden des bestimmten mindestens einen verbundenen Schlüssels durch den CN (102, 2101) als mindestens einen neuen Verteilungsschlüssel, der der Datentabellenkennung entspricht; und
Aktualisieren einer Entsprechung zwischen der Datentabellenkennung und einem Verteilungsschlüssel durch den CN (102, 2101) gemäß dem mindestens einen neuen Verteilungsschlüssel.

3. Koordinatorknoten (102, 2101, 300), umfassend:
eine Bestimmungseinheit (301), die konfiguriert ist zum Bestimmen einer Gruppe von mehreren Verteilungsschlüsseln, die einer Datentabellenkennung entspricht, gemäß der Datentabellenkennung, die einem Element von erhaltenen Daten entspricht, wobei jeder der mehreren Verteilungsschlüssel eine Spalte oder eine Kombination von einigen Spalten in mehreren Spalten von Daten ist, die der Datentabellenkennung entspricht, wobei die Gruppe von mehreren Verteilungsschlüsseln mindestens zwei verbundene Verteilungsschlüssel umfasst, wobei es sich jeweils um ein Schlüsselwort handelt, und die mindestens zwei verbundenen Verteilungsschlüssel einem gleichen Datenknoten entsprechen; und
Bestimmen eines Datenknotens (101), auf dem die Daten gespeichert werden müssen, und einer Speicherbereichskennung, die dem einen Datenelement auf dem Datenknoten (101) entspricht, gemäß jedem der mehreren Verteilungsschlüssel, wobei der Datenknoten (101) einen Speicherbereich umfasst, und der Speicherbereich einen öffentlichen Speicherbereich (2105), der allen Verteilungsschlüsseln entspricht, und mehrere private Speicherbereiche (2102, 2103, 2104) mit einer Eins-zu-eins-Entsprechung zwischen den mehreren Verteilungsschlüsseln und den mehreren privaten Speicherbereichen (2102, 2103, 2104) umfasst, wobei gemäß den mehreren Verteilungsschlüsseln mindestens zwei Datenknoten (101) bestimmt werden, und wobei gemäß den mindestens zwei verbundenen Verteilungsschlüsseln Kennungen von mindestens zwei privaten Speicherbereichen bestimmt werden, die mindestens zwei private Speicherbereiche auf dem gleichen Datenknoten der mindestens zwei Datenknoten (101) identifizieren; und
eine Sendeeinheit (302), die konfiguriert ist zum:
Senden der Daten und der Speicherbereichskennungen, die den mindestens zwei Datenknoten (101) entsprechen, gemäß den mehreren Verteilungsschlüsseln an mindestens zwei Datenknoten (101), wobei jede Speicherbereichskennung der Speicherbereichskennungen vom entsprechenden Datenknoten zum Speichern der Daten im privaten Speicherbereich verwendet wird, der der Speicherbereichskennung entspricht, und wobei die Kennungen der mindestens zwei Speicherbereiche, die dem gleichen Datenknoten entsprechen, von diesem Datenknoten zum Speichern der Daten in den mindestens zwei privaten Speicherbereichen (2102, 2103, 2104) dieses Datenknotens verwendet werden.

4. Koordinatorknoten (102, 2101, 300) nach Anspruch 3, ferner umfassend eine Verarbeitungseinheit (303), die konfiguriert ist zum:
Erhalten mindestens eines Verlaufsabfragedatensatzes, der der Datentabellenkennung entspricht, nach einer voreingestellten Dauer, wobei jeder Verlaufsabfragedatensatz einen verbundenen Schlüssel umfasst, und der verbundene Schlüssel ein Schlüsselwort, das zur Datenabfrage verwendet wird, im Verlaufsabfragedatensatz darstellt;
Bestimmen mindestens eines verbundenen Schlüssels, dessen Auftrittshäufigkeit in dem mindestens einen Verlaufsabfragedatensatz größer als eine Schwelle ist, gemäß dem mindestens einen Verlaufsabfragedatensatz;
Verwenden des bestimmten mindestens einen verbundenen Schlüssels als mindestens einen neuen Verteilungsschlüssel, der der Datentabellenkennung entspricht; und
Aktualisieren einer Entsprechung zwischen der Datentabellenkennung und einem Verteilungsschlüssel gemäß dem mindestens einen neuen Verteilungsschlüssel.

5. Nichtflüchtige computerlesbare Speichermedien, die Computeranweisungen zur Datenspeicherung speichern, die bei Ausführung durch einen oder mehrere Prozessoren den einen oder die mehreren Prozessoren zum Durchführen des Verfahrens nach einem der Ansprüche 1 bis 2 veranlassen.

## Revendications

1. Procédé de stockage de données, comprenant les étapes suivantes :
déterminer (201), par un nœud coordinateur, CN (102, 2101), en fonction d'un identifiant de table de données correspondant à un morceau de données obtenues, un groupe de clés de distribution multiples correspondant à l'identifiant de table de données, chacune des clés de distribution multiples étant une colonne ou une combinaison de plusieurs colonnes quelconques des colonnes de données multiples correspondant à l'identifiant de table de données, le groupe de clés de distribution multiples comprenant au moins deux clés de distribution de jointure, chacune étant un mot-clé, et lesdites au moins deux clés de distribution de jointure correspondant à un même nœud de données ;
déterminer, par le CN (102, 2101), en fonction de chacune des clés de distribution multiples, un nœud de données (101) sur lequel les données doivent être sauvegardées et un identifiant de zone de stockage correspondant audit un morceau de données sur ledit nœud de données (101), ledit nœud de données (101) comprenant une zone de stockage et ladite zone de stockage comprenant une zone de stockage publique (2105) correspondant à toutes les clés de distribution et des zones de stockage privées multiples (2102, 2103, 2104) avec une correspondance biunivoque entre les clés de distribution multiples et les zones de stockage privées multiples (2102, 2103, 2104), **caractérisé en ce que**, en fonction des clés de distribution multiples, au moins deux nœuds de données (101) sont déterminés, et de **en ce que**, en fonction desdites au moins deux clés de distribution de jointure, au moins deux identifiants de zone de stockage privée qui identifient au moins deux zones de stockage privées sur ledit même nœud de données des au moins deux nœuds de données (101) sont déterminés ; et
envoyer, par le CN (102, 2101), en fonction des clés de distribution multiples, les données et lesdits identifiants de zone de stockage correspondant auxdits au moins deux nœuds de données (101) aux au moins deux nœuds de données (101), chaque identifiant de zone de stockage desdits identifiants de zone de stockage étant utilisé par le nœud de données correspondant pour sauvegarder les données dans une zone de stockage privée correspondant à l'identifiant de zone de stockage, et les au moins deux identifiants de zone de stockage privée qui correspondent au même nœud de données étant utilisés par ce nœud de données pour sauvegarder les données dans les au moins deux zones de stockage privées (2102, 2103, 2104) de ce nœud de données.

2. Procédé selon la revendication 1, comprenant en outre les étapes consistant à :
après une durée prédéfinie, obtenir, par le CN (102, 2101), au moins un enregistrement d'interrogation historique correspondant à l'identifiant de table de données, chaque enregistrement d'interrogation historique comprenant une clé de jointure, et la clé de jointure représentant un mot-clé, utilisé pour l'interrogation de données, de l'enregistrement d'interrogation historique ;
déterminer, par le CN (102, 2101), en fonction du au moins un enregistrement d'interrogation historique, au moins une clé de jointure dont la fréquence d'apparition est supérieure à un seuil dans le au moins un enregistrement d'interrogation historique ;
utiliser, par le CN (102, 2101), la au moins une clé de jointure déterminée comme au moins une nouvelle clé de distribution correspondant à l'identifiant de table de données ; et
mettre à jour, par le CN (102, 2101), une correspondance entre l'identifiant de table de données et une clé de distribution en fonction de la au moins une nouvelle clé de distribution.

3. Nœud coordinateur (102, 2101, 300), comprenant :
une unité de détermination (301), configurée pour déterminer, en fonction d'un identifiant de table de données correspondant à un morceau de données obtenues, un groupe de clés de distribution multiples correspondant à l'identifiant de table de données, chacune des clés de distribution multiples étant une colonne ou une combinaison de plusieurs colonnes quelconques des colonnes de données multiples correspondant à l'identifiant de table de données, le groupe de clés de distribution multiples comprenant au moins deux clés de distribution de jointure, chacune étant un mot-clé, et lesdites au moins deux clés de distribution de jointure correspondant à un même nœud de données, et
pour déterminer, en fonction de chacune des clés de distribution multiples, un nœud de données (101) sur lequel les données doivent être sauvegardées et un identifiant de zone de stockage correspondant audit un morceau de données sur ledit nœud de données (101), ledit nœud de données (101) comprenant une zone de stockage et ladite zone de stockage comprenant une zone de stockage publique (2105) correspondant à toutes les clés de distribution et des zones de stockage privées multiples (2102, 2103, 2104) avec une correspondance biunivoque entre les clés de distribution multiples et les zones de stockage privées multiples (2102, 2103, 2104), **caractérisé en ce que**, en fonction des clés de distribution multiples, au moins deux nœuds de données (101) sont déterminés, et **en ce que**, en fonction desdites au moins deux clés de distribution de jointure, au moins deux identifiants de zone de stockage privée qui identifient au moins deux zones de stockage privées sur ledit même nœud de données desdits au moins deux nœuds de données (101) sont déterminés ; et une unité d'envoi (302), configurée pour
envoyer, en fonction des clés de distribution multiples, les données et les identifiants de zone de stockage correspondant aux au moins deux nœuds de données (101) aux au moins deux nœuds de données (101), chaque identifiant de zone de stockage desdits identifiants de zone de stockage étant utilisé par le nœud de données correspondant pour sauvegarder les données dans une zone de stockage privée correspondant à l'identifiant de zone de stockage, et les au moins deux identifiants de zone de stockage privée qui correspondent au même nœud de données étant utilisés par ce nœud de données pour sauvegarder les données dans les au moins deux zones de stockage privées (2102, 2103, 2104) de ce nœud de données.

4. Nœud coordinateur (102, 2101, 300) selon la revendication 3, comprenant en outre une unité de traitement (303), configurée pour :
après une durée prédéfinie, obtenir au moins un enregistrement d'interrogation historique correspondant à l'identifiant de table de données, chaque enregistrement d'interrogation historique comprenant une clé de jointure, et la clé de jointure représentant un mot-clé, utilisé pour l'interrogation de données, de l'enregistrement d'interrogation historique ;
déterminer, en fonction du au moins un enregistrement d'interrogation historique, au moins une clé de jointure dont la fréquence d'apparition est supérieure à un seuil dans le au moins un enregistrement d'interrogation historique ;
utiliser la au moins une clé de jointure déterminée comme au moins une nouvelle clé de distribution correspondant à l'identifiant de table de données ; et
mettre à jour une correspondance entre l'identifiant de table de données et une clé de distribution en fonction de la au moins une nouvelle clé de distribution.

5. Support non transitoire lisible par ordinateur servant à stocker des instructions informatiques pour le stockage de données qui, lorsqu'elles sont exécutées par un ou plusieurs processeurs, amènent le un ou plusieurs processeurs à effectuer le procédé des revendications 1 et 2.
